# EUROPEAN PATENT APPLICATION

(11) **EP 1 693 104 A1**
(43) Date of publication of application: **23.08.2006**
(21) Application number: 05075385.4
(22) Date of filing: 17.02.2005
(51) Int. Cl.: B01J 13/06, C11D 17/00, C11D 3/50

(54) **Products containing microcapsules**

(71) Applicant: UNILEVER N.V., 3013 AL Rotterdam (NL)
(72) Inventor: Maruyama, Shoji, Hagan-gun, Tochigi, 321-3325 (JP)
(74) Representative: Rosen Jacobson, Frans Lucas M.

(57) **Abstract**

The invention concerns compositions for washing or cleaning and/or for caring or protecting animate or inanimate surfaces comprising microcapsules having a polyurethane or polyurea capsule wall.

The invention further concerns microcapsules comprising a polyurethane or polyurea capsule wall obtainable by polycondensation of a polyfunctional isocyanate starting material comprises an asymmetric isocyanate with water and/or a polyfunctional alcohol or polyfunctional amine.

## Description

### Technical field

The invention relates to products for washing and cleaning and/or care and protection of animate or inanimate surfaces, that comprise micro-encapsulated benefit agents. The invention also relates to polyurethane and polyurea microcapsules made by polycondensation of polyfunctional isocyanate and polyfunctional alcohol or amine.

### Background and prior art

Micro-encapsulation is used in a large variety of different applications where a compound needs to be delivered or applied to a target area while prior to delivery the compound needs to be protected from it environment, or where that compound needs to be released in a time-delayed way or only after a treatment has been applied that triggers release. Various techniques for preparing microcapsules are known in the art and are used, depending on the contents to be encapsulated, the environment wherein the microcapsules should retain their integrity and the desired release mechanism.

Interfacial polycondensation is a well-known technique for preparing microcapsules and versatile microcapsule wall materials that can be produced are polyureas and polyurethanes. Such wall materials are produced by having a first phase which is water-immiscible and comprises a polyfunctional isocyanate, i.e. a diisocyanate and/or a polyisocyanate, and a second aqueous phase which may comprise a polyfunctional alcohol or amine, i.e. a diol and/or polyol for obtaining a polyurethane capsule wall or a diamine and/or polyamine comprising -NH and/or -NH₂ groups for obtaining a polyurea capsule wall.

If the material to be encapsulated is hydrophobic it will be included in the water-immiscible phase, whereafter the two phases are mixed by high shear mixing to form an oil-in-water emulsion. In this emulsion the polycondensation reaction will take place. Thus, the small droplets of the water-immiscible phase will be surrounded by the microcapsule wall formed by polycondensation of the isocyanate and the polyalcohol or polyamine as starting materials. Conversely, if the material to be encapsulated is hydrophilic, it will be included in the aqueous phase and the mixture of the two phases converted into a water-in-oil emulsion. The polycondensation reaction will then form microcapsule walls surrounding the droplets of water-miscible phase. Suitable emulsifiers are often utilised to aid in the preparation of, and to stabilise, the emulsion.

Suitable raw materials and processes for preparing microcapsules by polycondensation are described in US 4,640,709 and the literature described therein. As is exemplified therein, and also in US 6,133,197, polyurea and polyurethane microcapsules are often used for rugged applications, such as for encapsulation of agrochemicals e.g. herbicides and pesticides, where slow time-release is desired to set the agents free. For such applications the microcapsules also require a relatively high mechanical strength. For the polycondensation reaction a wide variety of suitable diisocyanate and symmetrical triisocyanate starting materials is disclosed in the prior art.

For the release of benefit agents intended for washing, cleaning, surface care and personal and skin care no polyurea or polyurethane microcapsules have thus far been applied. For such applications quicker and easier release and/or less mechanical strength are often desirable. Also it would be desirable to more precisely influence the capsule wall permeability and other capsule wall properties.

### Summary of the invention

It has been found that polyurethane or polyurea microcapsules are very suitable for carrying various kinds of hydrophobic or hydrophilic benefit agents that are suitable for use in products intended for application to animate and inanimate surfaces.

It has also been found that polyurethane or polyurea microcapsules with a wide range of release rates, mechanical strength, and capsule wall permeability can be produced by polycondensation involving an asymmetrical polyisocyanate.

Thus, the invention provides compositions for treating, washing and cleaning animate and inanimate surfaces that comprise microcapsules having a polyurethane or polyurea capsule wall.

Furthermore, the invention provides microcapsules having a polyurethane or polyurea capsule wall obtained by polycondensation of a polyfunctional isocyanate with water and/or a polyfunctional alcohol or polyfunctional amine, wherein the polyfunctional isocyanate comprises an asymmetrical polyisocyanate.

### Detailed description of the invention

For the purposes of this invention "polyfunctional isocyanate" is defined to encompass diisocyanates and polyisocyanates including triisocyanates. Likewise "polyfunctional alcohol" is defined to encompass diols and polyols including triols, and "polyfunctional amine" is defined to encompass diamines, and polyamines including triamines.

Microcapsules having a polyurethane or polyurea capsule wall are very suitable to carry a variety of benefit agents to be used in products for application to all kinds of surfaces. On the one hand surfaces may be inanimate, such as hard surfaces found in and around the house e.g. wooden, metal, ceramic, glass and paint surfaces, or soft surfaces such as clothing, carpets, curtains and other textiles. On the other hand, such surfaces may be animate surfaces, more particularly surfaces of a human or animal body i.e. human or animal skin and hair. For the purposes of this invention animate surfaces do not include plant surfaces.

Products intended for application to a surface are generally intended for washing/cleaning or for caring/protecting or both. Examples are cleaning products for hard surfaces or textiles, caring/protection products like polishes and waxes for delicate surfaces such as wood, car paint and leather, laundry softening agents, antisoiling agents, water repelling agents, and the like. Examples of products intended for the human skin are bath and shower products and shampoo for skin and hair cleansing, and all kinds of skin and hair care/protection products such as hair conditioners, hand and body lotions and creams, lip care products, deodorants and antiperspirants, make up products and the like.

The product types mentioned above intended for inanimate or for animate surfaces generally contain a detergent surfactant if they are intended for washing or cleaning, and/or an emulsifier if they are intended for caring or protection.

Thus, the invention provides compositions for washing or cleaning and/or for caring or protecting animate or inanimate surfaces that comprise microcapsules having a polyurethane or polyurea capsule wall.

More specifically, on the one hand the invention provides compositions for washing or cleaning hard surfaces or textiles that comprise a detergent surfactant and microcapsules having a polyurethane or polyurea capsule wall.

Furthermore, the invention provides compositions for hard surface or textile care or protection that comprise an emulsifier and microcapsules having a polyurethane or polyurea capsule wall.

Also, the invention provides compositions for washing or cleaning (cleansing) human or animal skin or hair, which comprise a detergent surfactant suitable for topical application and microcapsules having a polyurethane or polyurea capsule wall.

Additionally, the invention provides compositions for skin or hair care or protection that comprise an emulsifier suitable for topical application and microcapsules having a polyurethane or polyurea capsule wall.

Cleaning and cleansing compositions will comprise one or more surfactants that may be chosen from anionic, cationic, nonionic, zwitterionic and amphoteric surfactants known in the art. For cleansing composition for skin or hair the surfactants must obviously meet the condition of being suitable for topical application.

The compositions according to the invention may optionally comprise a variety of components known in the art and adapted to their specific use. Thus, compositions intended for inanimate surfaces may comprise components such as builders, sequestrants, hydrotropes, organic solvents, pH regulation components such as organic or inorganic acids and/or bases, thickening agents, chlorine or peroxide bleaches, laundry softening agents, scouring agents, biocides, colouring agents, pearlescents, preservatives, perfumes. Compositions intended for application may contain a variety of vehicles suitable for topical application and a variety of benefit agents for skin or hair.

The microcapsules used in the compositions according to the invention are prepared using polycondensation processes known in the art for preparing polyurethane or polyurea microcapsules carried out in an oil-in-water or water-in-oil emulsion.

The isocyanate starting material may comprise polyfunctional isocyanates known in the art for micro-encapsulation by polycondensation, which includes diisocyanates and symmetric polyisocyanates. Preferably the isocyanate starting material comprises at least one asymmetric polyfunctional isocyanate, which is preferably a triisocyanate. The asymmetric isocyanate is preferably aliphatic. Without being bound by theory it is assumed that the irregularities in the polymer molecular structure of the cell wall, caused by the incorporation of the asymmetric isocyanate, increase the permeability and decrease the strength of the cell wall and thus leads to easier release of the contents of the microcapsule. This is important for those applications where easy release is more important than robustness and durability of the microcapsule, such as for most applications in washing, cleaning and care compositions for animate and inanimate surfaces.

A preferred asymmetric isocyanate is 2-isocyanatoethyl 2,6-diisocyanato-hexanoate having the following structural formula: 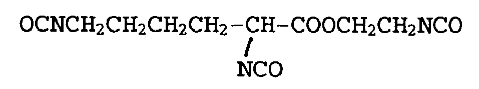 This may be used either alone as the isocyanate starting material or in combination with other isocyanates, preferably diisocyanates such as hexamethylene-diisocyanate.

Preferably the isocyanate starting material comprises at least 0.01% by weight that starting material of asymmetric isocyanate, more preferably at least 1%, most preferably at least 10% by weight.

The aqueous phase preferably comprises polyfunctional alcohol or amine. Polyfunctional alcohol starting materials suitable for the polycondensation process are well known in the art and include various di- and tri-functional phenolic compounds such as bisphenol A, resorcinol and pyrogallol and aliphatic diols and polyols, such as alkylene diols having 2-20 C-atoms, polyethylene glycols, polypropylene glycols, mixed polyethylene oxide/polypropylene oxide polycondensates and polyvinyl alcohol.

Polyfunctional amine starting materials suitable for the polycondensation process are well known in the art and include various aromatic di- and tri-amines such as phenylene and toluene diamine and 1,3,5-benzene- and 2,4,6-toluene-triamine, and aliphatic di- and poly-amines such as various alkylene diamines having 2-20 C-atoms and polyalkylene polyamines such as triethylene tetramine, tetraethylene pentamine etc.

For the encapsulation process to take place the water-immiscible (organic) phase and the aqueous phase are converted into an emulsion using mixing equipment known in the art for such processes, particularly high shear mixing equipment. As is well known in the art, the mixing process determines the droplet size of the emulsion and thereby the microcapsule particle size. The mixing conditions are preferably chosen such that the average droplet size and therefore the median diameter (volumetric average particle size) of the microcapsules is between 0.1 and 500µm, preferably at or below 300µm, more preferably at or below 150µm. An emulsifier is usefully added to help in the formation of a suitable emulsion, particularly if a low droplet size (and thus microcapsule size) is desired. Optionally a dispersant may be added to further stabilize the emulsion and keep the microcapsules dispersed after their formation. Preferably, a dispersing agent is added which also functions to obtaining the desired droplet size and, if desired, keep the microcapsules in suspension after their formation.

By choosing the relative amount of each of the phases, and a suitable emulsifier and/or dispersant as required, the emulsion can be either an oil-in-water or a water-in-oil emulsion, whereby the discontinuous phase will form the microcapsule content.

The reaction conditions required for the polycondensation reaction to take place efficiently are again well known in the art. Depending on the reagents, a reaction temperature between 20° and 90°C is generally suitable, preferably between 50° and 85°C. The pH of the starting emulsion is preferably chosen between 4 and 10, more preferably between 6 and 8.

Optionally a suitable catalyst known in the art may be added such as an organometallic or amine catalyst. Representative examples thereof are organotin compounds such as dibutyltin laurate and amines such as tris(dimethylamino-methyl)phenol. However, there may be environmental/safety objections against such catalysts and the microcapsules according to the invention may be suitable prepared without the use of such catalysts.

After the polycondensation encapsulation process is complete, the microcapsules can be separated from the reaction mixture by processes known in the art, such as filtration or centrifugation.

### Examples

### Examples 1 and 2

Emulsions were prepared from the following mixtures 1 and 2 by mixing for 10 min. at 20°C using a Robo mixer with mixer wings at 4000rpm:

| **Material** | **Function** | **% wt in emulsion** | |
|---|---|---|---|
| | | Ex.1 | Ex.2 |
| **Oil phase** | | | |
| MQ resin (Silicone resin X21-5249) | water repellent | 10 | 10 |
| Diisobutyl adipate | solvent | 10 | 10 |
| 2-Isocyanatoethyl 2,6-diisocyanato-hexanoate | asymmetric isocyanate reactant | 1.0 | 0.5 |
| Duranate TPA100* | symmetric isocyanate reactant | - | 0.5 |
| | | | |

| **Aqueous phase** | | | |
|---|---|---|---|
| Polyethylene glycol (M.W. 600) | Polyol reactant | 5.0 | 5.0 |
| Polyvinylalcohol (M.W. 22.000) | Dispersant | 0.013 | 0.013 |
| Demin water | | To 100 | to 100 |

| | | | |
|---|---|---|---|
| *) HDI Polyisocyanate marketed by Asahi Kasei Chemicals Corporation | | | |

In these emulsions the polycondensation reactions were carried out at 70°C for 24 hours. Aqueous suspensions of microcapsules were obtained. Microcapsule particle size was between 0.1 and 300µm with a median diameter (volumetric average particle size) of 130µm.

The suspensions were used in a bath cleaning composition according to the formulation below:

| | |
|---|---|
| Sec. C₉-C₁₁ alkanol ethoxylate 12EO | 5.00% wt |
| Cocoamido-propyl betaine | 0.60% wt |
| Diethylenetriamine pentaacetate 5Na | 1.60% wt |
| EDTA 2Na | 0.90% wt |
| Diethylene glycol butylether | 3.00% wt |
| Dipropylene glycol butylether (low odour) | 0.30% wt |
| Citric acid | 0.35% wt |
| Proxel GXL biocide | 0.02% wt |
| Microcapsule suspension obtained above | 10.00% wt |
| Water | to 100% |

The bath cleaning compositions delivered excellent water-repellent properties to bath tubs due to the presence of the encapsulated silicone resin. The silicone resin could not successfully be incorporated in the cleaning composition without first being encapsulated.

### Example 3

An emulsion was prepared from the following mixture 3 by mixing for 10 min. at 20°C using a Robo mixer with mixer wings at 4000rpm:

| **Material** | **Function** | **%wt in emulsion** |
|---|---|---|
| | | Ex. 3 |
| **Oil phase** | | |
| Neopentyl glycol dioctanoate | Smooth feel agent | 20 |
| Diisobutyl adipate | solvent | 5.0 |
| 2-Isocyanatoethyl 2,6-diisocyanato-hexanoate | asymmetric isocyanate reactant | 1.0 |
| Duranate TPA100* | symmetric isocyanate reactant | - |
| | | |

| **Aqueous phase** | | |
|---|---|---|
| Polyethylene glycol (M.W. 600) | Polyol reactant | 3.0 |
| Polyvinylalcohol (M.W. 22.000) | Dispersant | 0.063 |
| Demin water | | To 100 |

In the emulsion the polycondensation reactions were carried out as described above. An aqueous suspension of microcapsules was obtained. Microcapsule particle size was between 0.1 and 100µm with a median diameter (volumetric average particle size) of 20µm.

The suspension was added to a standard hair-conditioning agent. After treatment of the hair with the hair-conditioning agent the microcapsules burst on drying the hair with a hair dryer giving a smooth feel to the hair.

## Claims

1. A composition for washing or cleaning and/or for caring or protecting animate or inanimate surfaces **characterised in that** it comprises microcapsules having a polyurethane or polyurea capsule wall.

2. A composition according to claim 1 **characterised in that** it comprises a detergent surfactant

3. A composition according to claim 1 **characterised in that** it comprises an emulsifier.

4. A composition according to any one of claims 1-3 **characterised in that** the microcapsule wall is obtained by polycondensation using a polyfunctional isocyanate starting material which comprises an asymmetric polyfunctional isocyanate.

5. A composition according to claim 4 **characterised in that** the asymmetric isocyanate is an aliphatic triisocyanate.

6. A composition according to claim 5 **characterised in that** the asymmetric isocyanate is 2-isocyanatoethyl 2,6-diisocyanato-hexanoate.

7. A composition according to any one of claims 4-6 **characterised in that** the polyfunctional isocyanate starting material comprises at least 0.01% by weight of asymmetric isocyanate.

8. Microcapsules comprising a polyurethane or polyurea capsule wall obtainable by polycondensation of a polyfunctional isocyanate starting material with water and/or a polyfunctional alcohol or polyfunctional amine starting material, **characterised in that** the polyfunctional isocyanate comprises an asymmetric polyfunctional isocyanate.

9. Microcapsules according to claim 8 **characterised in that** the asymmetric isocyanate is an aliphatic triisocyanate.

10. Microcapsules according to claim 9 **characterised in that** the asymmetric isocyanate is 2-isocyanatoethyl 2,6-diisocyanato-hexanoate.

11. Microcapsules according to claims 8-10 **characterised in that** the polyfunctional isocyanate starting material comprises at least 0.01% by weight of asymmetric isocyanate.
